# EUROPEAN PATENT SPECIFICATION

(11) **EP 2 120 185 B1**
(45) Date of publication and mention of the grant of the patent: **13.07.2011**
(21) Application number: 09153842.1
(22) Date of filing: 27.02.2009
(51) Int. Cl.: G06K 9/72, G06F 17/22

(54) **Character recognition program, character recognition electronic component, character recognition device, character recognition method, and data structure**
Zeichenerkennungsprogramm, elektronisches Bauteil zur Zeichenerkennung, Zeichenerkennungsvorrichtung, Zeichenerkennungsverfahren und Datenstruktur
Programme de reconnaissance de caractères, composant électronique de reconnaissance de caractères, dispositif de reconnaissance de caractères, procédé de reconnaissance de caractères, et structure de données

(30) Priority: 14.03.2008 JP 2008066504
(43) Date of publication of application: 18.11.2009
(73) Proprietor: OMRON CORPORATION, Kyoto-shi, Kyoto 600-8530 (JP)
(72) Inventor: Aizawa, Tomoyoshi, Kyoto-shi, Kyoto 600-8530 (JP)
(74) Representative: Brochard, Pascale

(56) References cited:
- WO-A-2007/002377
- JP-A- 2005 141 604
- US-A1- 2005 105 799
- US-A1- 2006 045 340
- US-B1- 7 120 302
- SPENCER G A: "Digitization, coded character sets, and optical character recognition for multi-script information resources: the case of the Letopis' Zhurnal'nykh Statei" RESEARCH AND ADVANCED TECHNOLOGY FOR DIGITAL LIBRARIES. 5TH EUROPEAN CONFERENCE, ECDL 2001. PROCEEDINGS (LECTURE NOTES IN COMPUTER SCIENCE VOL.2163) SPRINGER-VERLAG BERLIN, GERMANY, 2001, pages 429-437, XP002539423 ISBN: 3-540-42537-3
- LIANGRUI PENG ET AL: "Multilingual document recognition research and its application in China" DOCUMENT IMAGE ANALYSIS FOR LIBRARIES, 2006. DIAL '06. SECOND INTERNAT IONAL CONFERENCE ON LYON, FRANCE 27-28 APRIL 2006, PISCATAWAY, NJ, USA,IEEE, 27 April 2006 (2006-04-27), pages 126-132, XP010912513 ISBN: 978-0-7695-2531-0

## Description

### BACKGROUND OF THE INVENTION

### 1. TECHNICAL FIELD

The present invention relates to a character recognition program for performing character recognition in correspondence to the languages of plural countries, a character recognition electronic component, a character recognition device, a character recognition method, and a data structure.

### 2. RELATED ART

Various techniques related to character recognition having plural types of languages as a recognition target have been conventionally proposed.
For instance, a character recognition system having a recognition dictionary for each language is proposed (refer to Japanese Unexamined Patent Publication No. 07-200737). This character recognition system includes a feature quantity dictionary for plural languages and a feature quantity extraction program for plural languages, and recognizes the character by downloading the feature quantity extraction program and the feature quantity dictionary for the language to recognize.

A portable information terminal in which the recognition dictionary data is divided into an internal memory and a memory card is proposed (refer to Japanese Unexamined Patent Publication No. 2005-141604). This portable information terminal loads a character recognition program and a candidate refinement dictionary data to a high-speed memory, and stores detailed dictionary data in a memory card attached to the terminal.

A character recognition device having a recognition dictionary for plural languages and a recognition dictionary for each language is proposed (refer to Japanese Unexamined Patent Publication No. 2006-092138). This character recognition device includes a dictionary for character type (e.g., Japanese dictionary and English dictionary), and appropriately switches the dictionary depending on the type of character to recognize. This switching is sequentially performed by first recognizing with the English dictionary and then recognizing with the Japanese dictionary if an illegible character is present.

However, such character recognition of the prior art has a problem in that the memory usage amount and the processing time increase when the recognition target language increases.

Specifically, if English, German, and French are the recognition target languages, the character "A" can be used in all of English, German, and French. Thus, if the recognition dictionary is provided for each language as in Japanese Unexamined Patent Publication Nos. 07-200737 and 2006-092138, the matching information of the character "A" exists in the recognition dictionary of all of English, German, and French, and is redundantly stored in the memory.

Similarly, numbers and symbols ("!", "&", etc.) are commonly used in all languages. Thus, if the recognition dictionary is provided for each language, the matching information of the numbers and symbols exists by the number of languages, and are redundantly stored in the memory.

If the candidate refinement dictionary data is provided as in Japanese Unexamined Patent Publication No. 2005-141604, the candidate refinement dictionary data is added to the detailed dictionary data necessary for the original character recognition, and thus the entire amount of data increases, and the necessary storage capacity becomes large.

If plural languages are integrated in one recognition dictionary to alleviate redundancy, the number of matching processing times becomes redundant, and the processing time becomes long. For instance, if Japanese and English are integrated to one, the check process with the matching information of Japanese is also performed although only English is the recognition target, and the process becomes redundant.

In contrast, if the matching information of Japanese and English (include numbers and symbols) are provided as independent recognition dictionary as in Japanese Unexamined Patent Publication No. 2006-092138, time is required to switch the dictionary when the character string in which Japanese and English coexist is the recognition target, and thus the processing time increases.

Such a problem is a very large problem in an environment where a CPU is poor and the memory capacity is small such as in portable equipment. US-B-7 120 302 discloses to combine character type dictionaries when the input is expected to contain characters of both dictionaries.

### SUMMARY

One object of the present invention is to suppress both increase in the memory usage amount and the processing time due to increase in the recognition target language.

In accordance with one aspect of the present invention, there is provided a character recognition program according to claim 1.

The category may be configured by an attribute capable of distinguishing languages such as English and Japanese. The category not only distinguishes languages, but may be configured by an attribute other than language such as name, telephone number, E-mail, or URL.

The specifying unit may be configured by appropriate means such as an operation unit allowing input operation by a user to select the attribute, a processing unit for determining the category through an appropriate process, or the like.
The output unit may be configured by an appropriate means for making an output such as a display unit for screen display.

According to the present invention, the character common in plural languages is collected to one registered character data given categories of plural languages, thereby reducing the amount of data of the dictionary data. The registered character data used in checking can be reduced by the check target reduction step, and the checking time can be reduced as a whole.

In accordance with the aspect of the present invention, the dictionary data is registered, all together, with the registered character data in units of character type; initial address data indicating an initial address of a region stored with the registered character data of each character type in the storage unit; and the check target reduction step jumps to the initial address of the character type of the check target and performs a check by the registered character data given the category in the character type, and repeats the process of jumping to the initial address of the character type of the next check target when the check in the character type is terminated to reduce the check target.

The character type may be configured by types of characters such as alphabets of standard type and alphabets of italic type; Hiragana and Katakana; first standard of kanji, second standard of kanji (names of people), and second standard of kanji (names of places); or alphabets and German text.

The character type that does not require checking can be excluded from the check target, whereby the processing time can be reduced as a whole.

In accordance with the aspect of the present invention, the language category may be configured by an attribute which distinguishes languages in which the registered character data is used.
Thus, the language using the registered character data can be distinguished by category.

In the aspect of the present invention, one or both of the category and the character type may be configured by a bit string code.

Thus, a plurality of categories or a plurality of character types may be expressed with one code.

In accordance with another aspect of the present invention, a character recognition electronic component including a storage unit storing the character recognition program and the dictionary data; and a calculation unit for executing each step is provided.
Thus, the character recognition function can be easily added by mounting the character recognition electronic component on the portable terminal.

In accordance with still another aspect of the present invention, there is provided a character recognition electronic component including a storage unit storing the character recognition program and the dictionary data; a calculation unit for executing each step; and the specifying unit, the character image acquiring unit, and the output unit.
Thus, a character recognition device that actually operates can be provided.

In accordance with yet another aspect of the present invention, there is provided a character recognition method according to claim 7.

Thus, an efficient character recognition method can be used.

In accordance with yet another aspect of the present invention, there is provided a data structure of dictionary data used in character recognition according to claim 8;

Thus, dictionary data capable of efficiently performing character recognition can be provided.

In accordance with the aspect of the present invention, initial address information indicating an initial address in units of character type is registered at a header portion.
Thus, direct jump can be made to the character type portion of the recognition target with reference to the initial address of the header portion to perform a check. Therefore, efficient dictionary data capable of reducing the processing time of the character recognition can be provided.

According to the present invention, both increase in the memory usage amount and the processing time due to increase in the recognition target language can be suppressed.

### BRIEF DESCRIPTION OF THE DRAWINGS

Fig. 1 is a perspective view of a portable terminal;
Fig. 2 is a block diagram showing a configuration of the portable terminal;
Figs. 3A and 3B are explanatory views of a screen displayed on an operation screen display unit;
Figs. 4A and 4B are explanatory views of a screen displayed on the operation screen display unit;
Figs. 5A and 5B are explanatory views of a class code and a language code;
Fig. 6 is a configuration diagram of dictionary data;
Fig. 7 is a configuration diagram of setup data;
Fig. 8 is a flowchart of an operation executed by a CPU;
Fig. 9 is a flowchart of the recognition process executed by the CPU;
   and
Figs. 10A and 10B are explanatory views of reducing the processing time by the dictionary data.

### DETAILED DESCRIPTION

One embodiment of the present invention will be described below with reference to the drawings.

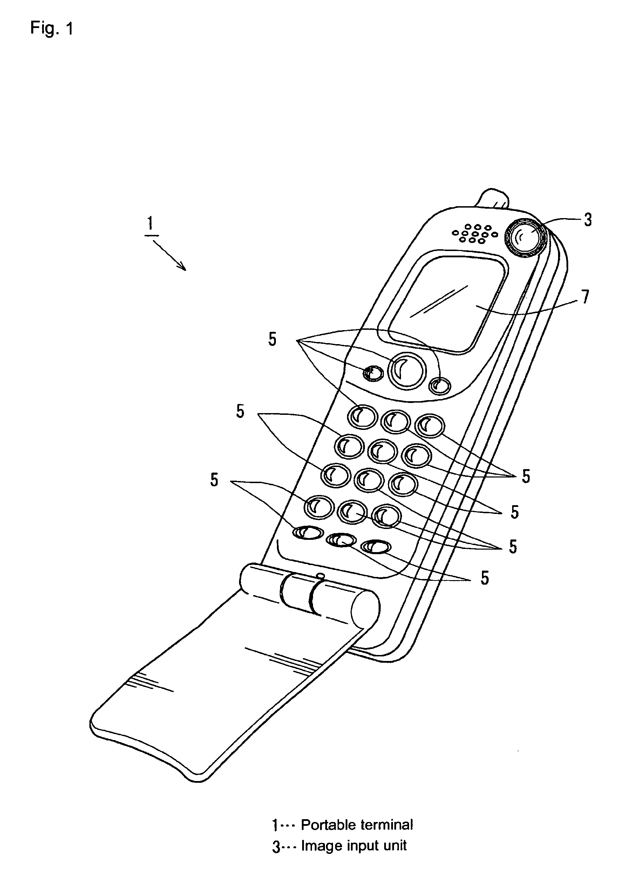

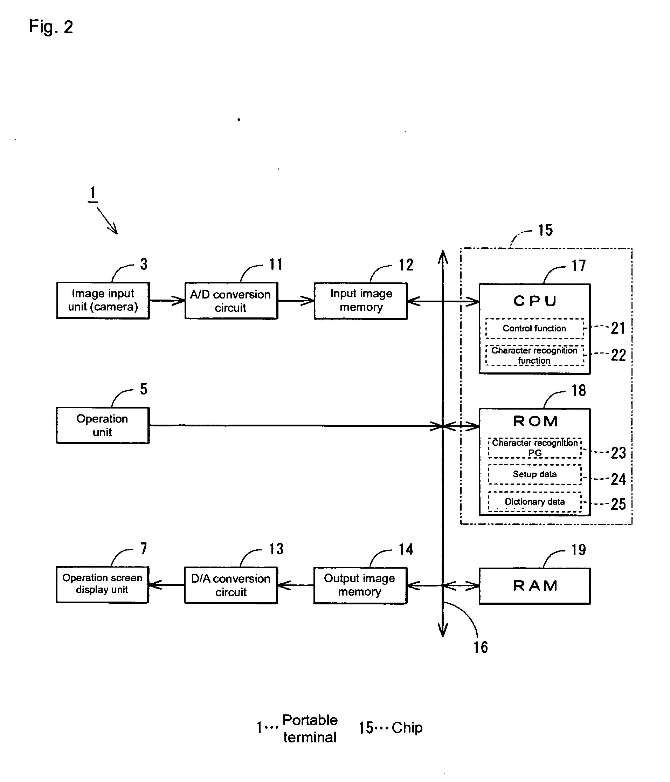

Fig. 1 is a perspective view of a portable terminal 1, and Fig. 2 is a block diagram of a configuration of the portable terminal 1.

As shown in Fig. 1, the portable terminal 1 is arranged with an image input unit 3, an operation unit 5, and an operation screen display unit 7. The image input unit 3 is a digital camera for imaging an image, the operation unit 5 is a button that is push operated, and the operation screen display unit 7 is a liquid crystal display or an organic EL display for displaying an image.

As shown in Fig. 2, the image input unit 3 is connected to a bus 16 by way of an A/D conversion circuit 11 and an input image memory 12. The imaged image obtained by having the image input unit 3 perform imaging is A/D converted in the A/D conversion circuit 11, stored as digital image data by the input image memory 12, and then transmitted to a CPU 17. The digital image data may be ultimately stored in a separate storage device (non-volatile memory etc.). The image input unit 3 starts imaging on receiving an imaging signal from the CPU 17.

The operation unit 5 is connected to the bus 16. The operation unit 5 transmits a push signal push operated by a user to the CPU 17 via the bus 16.

The operation screen display unit 7 is connected to the bus 16 by way of a D/A conversion circuit 13 and an output image memory 14. When image data is transmitted from the CPU 17, the image data is temporarily stored in the output image memory 14, D/A converted in the D/A conversion circuit 13, and then displayed on the operation screen display unit 7.

The bus 16 is connected with the CPU 17, a ROM 18, and RAM 19.

The CPU 17 is a processor for performing various operations using the RAM 19 as a temporary storage region according to the program stored in the ROM 18, and has a control function 21 for controlling each unit and a character recognition function 22.

The ROM 18 stores character recognition program 23, setup data 24, and dictionary data 25.

The RAM 19 temporarily stores the data used by the CPU 17 in various controls and calculations.

The portable terminal 1 is also arranged with a communication antenna for performing wireless communication, a speaker for performing audio output, a microphone for collecting sound, and the like. The portable terminal 1 is thus configured to be used as a mobile telephone.

As shown with a virtual line in the figure, the CPU 17 and the ROM 18 may be mounted on one chip 15 and configured as an electronic component. In this case, the character recognition function can be easily added by arranging the chip 15 in the portable terminal 1.

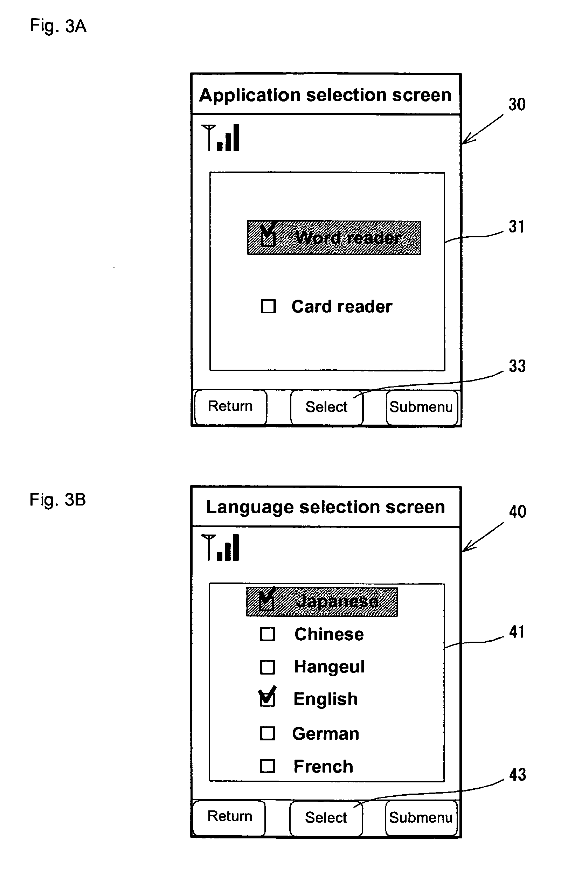

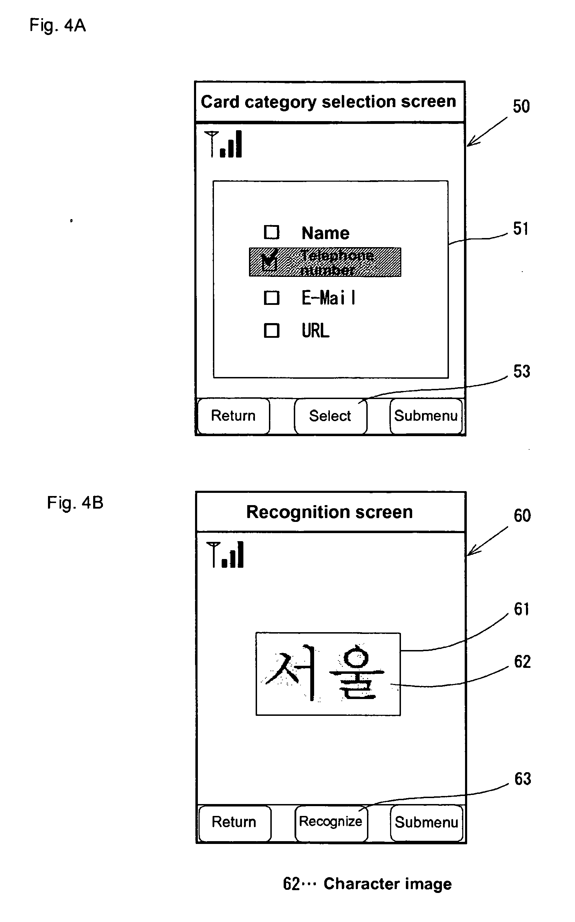

Figs. 3A and 3B and Figs. 4A and 4B are explanatory views of a screen the CPU 17 displays on the operation screen display unit 7 when performing character recognition.

An application selection screen 30 shown in Fig. 3A is arranged with an application selecting section 31 and a select button 33. The application selecting section 31 is the portion displaying the desired application in a selectable manner to the user, where a word reader and a card reader are displayed as selectable applications in the present example. When the word reader is selected and the select button 33 is pushed, the screen transitions to a language selection screen 40, whereas when the card reader is selected and the select button 33 is pushed, the screen transitions to a card category selection screen 50.

The language selection screen 40 shown in Fig. 3B is arranged with a reading language selecting section 41 and a select button 43. When the language to read is selected by the user in the language selecting section 41 and the select button 43 is pushed, the screen transitions to a recognition screen 60 of Fig. 4B.

The card category selection screen 50 shown in Fig. 4A is arranged with a category selecting section 51 and a select button 53. When the category to read from a card is selected by the user in the category selecting section 51 and the select button 53 is pushed, the screen transitions to the recognition screen 60 of Fig. 4B.

The recognition screen 60 shown in Fig. 4B is arranged with an imaged image displaying section 61 and a recognize button 63. When the recognize button 63 is push operated by the user, the CPU 17 recognizes a character image 62 contained in the displayed imaged image, and performs a check with the dictionary data 25.

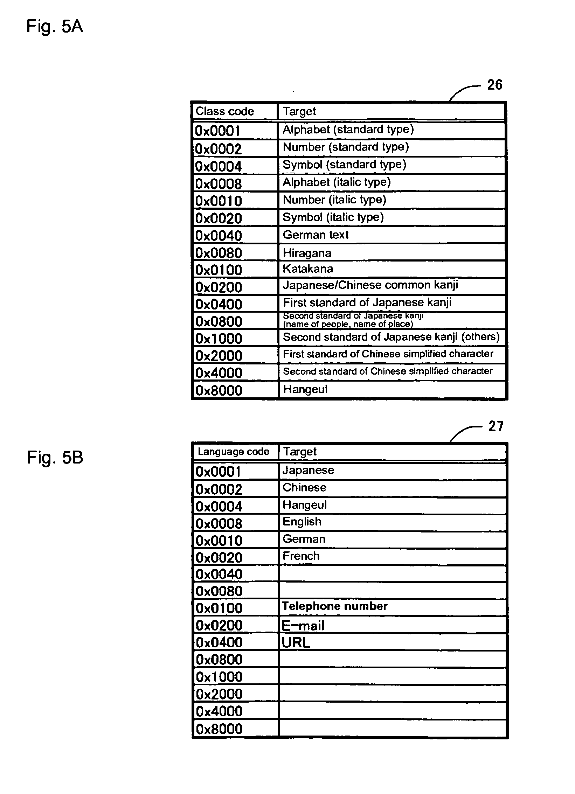

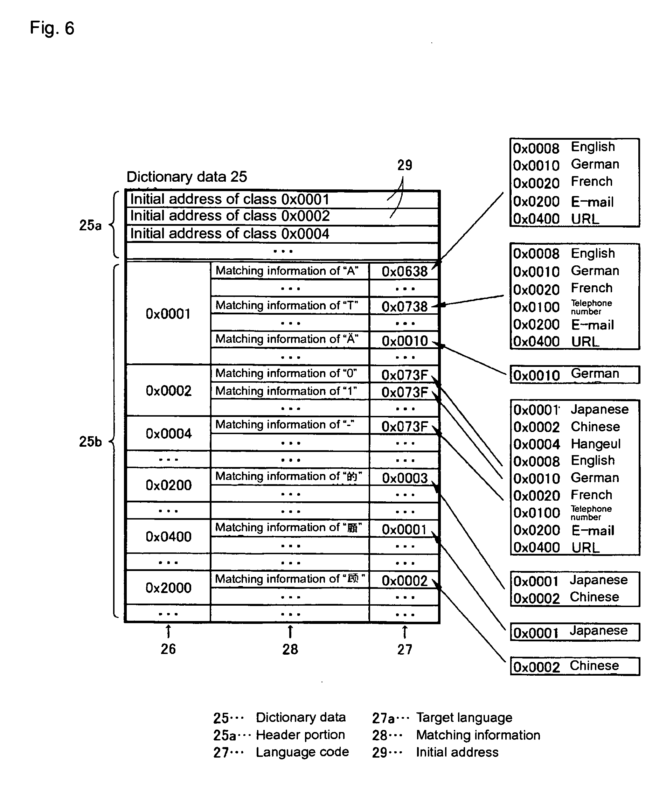

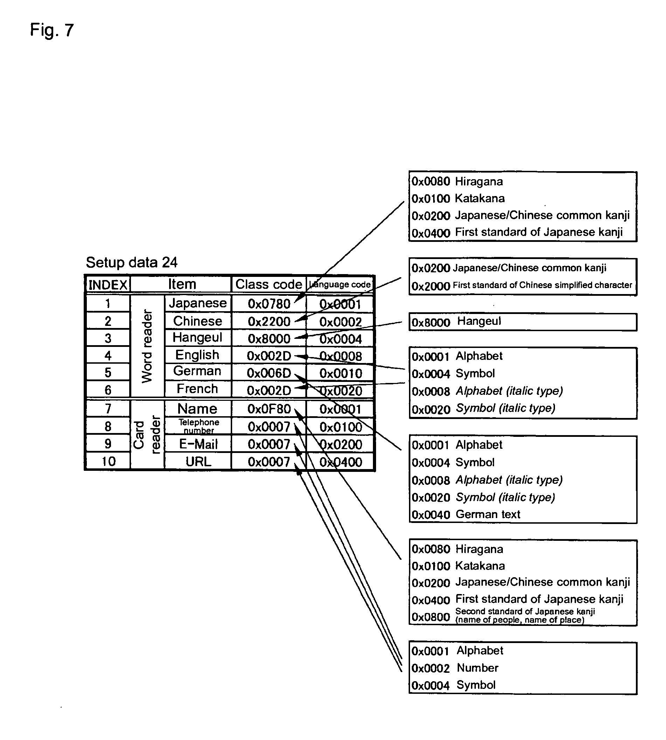

Figs. 5A and 5B are explanatory views describing a class code 26 and a language code 27, Fig. 6 is a configuration diagram of the dictionary data 25 using the class code 26 and the language code 27, and Fig. 7 is a configuration diagram of the setup data 24 using the class code 26 and the language code 27.

As shown in Fig. 5A, the class code 26 (may be referred to as a character type code) is a bit string code that categorizes characters by character type. Matching information 28 of each character stored in an individual dictionary portion 25b of the dictionary data 25 (see Fig. 6) is categorized and organized by such a class code 26.

Specifically, categorization is made by the class code 26 to alphabet (standard type), number (standard type), symbol (standard type), alphabet (Italic type), number (Italic type), symbol (Italic type), German text, Hiragana, Katakana, Japanese/Chinese common kanji, first standard of Japanese kanji, second standard of Japanese kanji (name of people, name of place), second standard of Japanese kanji (others), first standard of Chinese simplified character, second standard of Chinese simplified character, and Hangeul.

The standard types and Italic types are respectively prepared for the alphabets, numbers, and symbols to enhance the recognition rate.

The kanji common in Japanese and Chinese are categorized as Japanese/Chinese kanji, and such Japanese/Chinese kanji are excluded from the Japanese portion and the Chinese portion of the dictionary data 25 to reduce the capacity of the dictionary data 25 for optimization.

Optimization will be specifically described in the example shown in Fig. 6, where the matching information 28 of the character of the kanji " 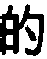 " common in Japanese (first standard of Japanese kanji) and Chinese (first standard of Chinese simplified character) is stored in the Japanese/Chinese common kanji (class code: 0x0200), and is not stored in the first standard of Japanese kanji (class code: 0x0400) and the first standard of Chinese simplified character (class code: 0x2000). Therefore, the matching information 28 of the same kanji " 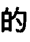 " is prevented from being redundantly stored in the Japanese portion and the Chinese portion.

The language code 27 (also referred to as an attribute code) shown in Fig. 5B is a bit string code that categorizes each character according to attribute such as in which language the character is used. One character in the dictionary data 25 (see Fig. 6) may be given a plurality of language codes 27.

Attributes, specifically, Japanese, Chinese, Hangeul, English, German, French, telephone number, E-mail, and URL are given to the matching information 28 of each character in the dictionary data 25 (see Fig. 6) by the language code 27.

Specifically describing in the example illustrated in Fig. 6, the alphabet "A" is used in English (language code: 0x0008), German (language code: 0x0010), French (language code: 0x0020), E-mail (language code: 0x0200), and URL (language code: 0x0400), and thus the language code 27 (language code: 0x0638) in which all such language codes 27 (bit string code) are added is given.

Furthermore, "T" categorized as the alphabet by the class code 26 similar to "A" is also used in the telephone number (language code: 0x0100) in addition to the attributes of the "A", and thus the language code 27 (language code: 0x0738) in which all such language codes 27 (bit string code) are added is given.

As shown in Fig. 6, the dictionary data 25 is configured by a header portion 25a and the individual dictionary portion 25b.

The header portion 25a is stored in order with an initial address 29 of each class.

The individual dictionary section 25b is stored with the matching information 28 of each character while being divided by the class code 26. The matching information 28 of each character is given the language code 27. The language code 27 is the bit string code in which a plurality of language codes 27 indicating the attribute of the character of the matching information 28 are added. For example, "0x0638" in which the bit string codes of five attributes of English, German, French, E-mail, and URL are added is given to the alphabet "A".

Therefore, the dictionary data 25 divides the matching information 28 by the class code 26, and gives the language code 27 to each matching information 28 to thereby obtain a data structure with high expandability with which reduction in the amount of data and reduction in the matching processing time are achieved.

Fig. 7 shows a configuration diagram of the setup data 24.

The setup data 24 is configured by an INDEX, an item, the class code 26, and the language code 27.

The INDEX stores a unique sequence number.

The item is configured by being divided to the word reader and the card reader, which are the applications. The word reader is set with the item of various languages, and the card reader is set with the reading targets (name, telephone number, etc.).

The class code 26 is stored with a code added with the class code 26 (bit string code) corresponding to the application defined in the item. That is, in Japanese in the word reader, Hiragana (class code: 0x0080), Katakana (class code: 0x0100), Japanese/Chinese common kanji (class code: 0x0200), and first standard of Japanese kanji (class code: 0x0400) need to be read, and thus the class code 26 (0x0780) in which the respective class codes 26 are added is stored.

The language code 27 is stored with the language code 27 corresponding to the application defined in the item in bit string code.

According to the setup data 24, the user is able to select the application, and the target character that needs to be subjected to matching of the dictionary data 25 is reduced to a minimum.

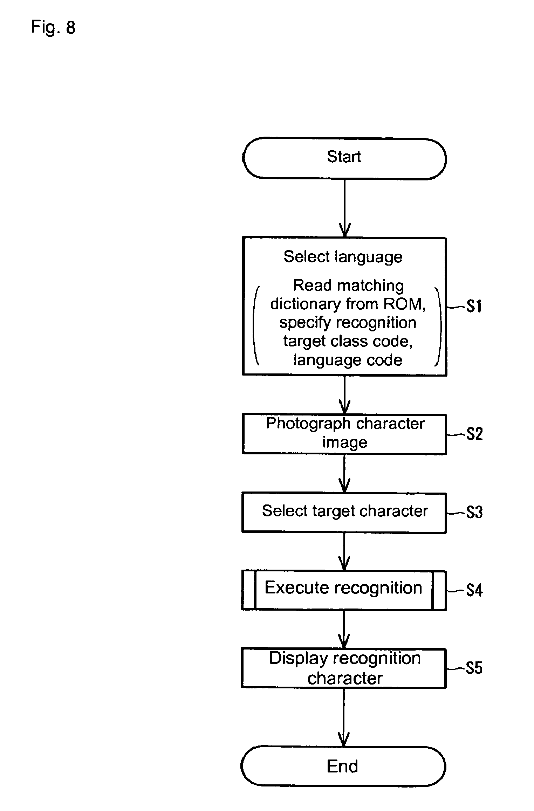

Fig. 8 shows a flowchart of an operation executed by the CPU 17 of the portable terminal 1.

The CPU 17 calls out the application function from the ROM 18, and executes a language selection process (step S1). In the language selection process, the application selection screen 30 shown in Fig. 3A is displayed on the operation screen display unit 7, and either the "word reader" or the "card reader" is selected in the application selecting section 31. When the "word reader" is selected, the language selection screen 40 is subsequently displayed, and the language is selected in the language selecting section 41. When the "card reader" is selected, the card category selection screen 50 is subsequently displayed, and the reading target is selected in the category selecting selection 51.

The item (INDEX) of the setup data 24 (see Fig. 7) is thereby defined, and the CPU 17 reads the class code 26 and the language code 27 of the INDEX from the setup data 24, and temporarily stores the same.

The CPU 17 movie displays the video photographed with the image input unit 3 on the operation screen display unit 7, and enables the user to image the character image to read (step S2). This imaging is executed with the operation of the operation unit 5 by the user as a trigger.

The CPU 17 displays the imaged image acquired in the image input unit 3 on the operation screen display unit 7, and enables the user to select the target character (step S3). The selection of the target character is preferably executed by selecting the region to be read with the operation of the operation unit 5.
In this case, the CPU 17 cuts out the character in the selected region, and separates the same into the character image of every one character.

The CPU 17 starts the character recognition function 22 by reading out the character recognition program 23 from the ROM 18, and executes the recognition process on the imaged image of the target character selected by the user (step S4). The CPU 17 displays the character recognized in the recognition process on the operation screen display unit 7 (step S5), and terminates the process.

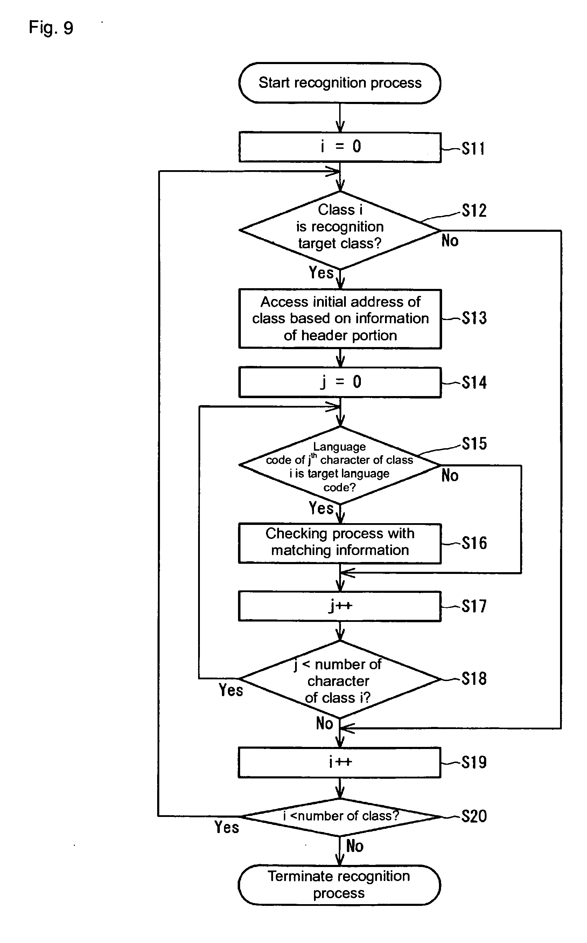

Fig. 9 shows a detailed flowchart of the recognition process executed by the CPU 17 in step S4.

The CPU 17 that started the recognition process first initializes the variable i (step S11), and determines whether or not the class i is the recognition target class (step S12). Here, the class i is the i^{th} class from the top shown in the dictionary data 25 of Fig. 6. In this case, the CPU 17 determines that the class i is the recognition target class if the class i is contained in the class code 26 acquired in step S1, and that the class i is not the recognition target class if the class i is not contained in the class code 26.

If the class i is the recognition target class (step S12: Yes), the CPU 17 references the header portion 25a of the dictionary data 25, and directly accesses the initial address 29 of the class i in the individual dictionary portion 25b (step S13). The class that is not the recognition target is skipped by such direct access thereby increasing the processing speed.

The CPU 17 initializes the variable j (step S14), and determines whether or not the language code 27 of the j^{th} character of the class i in the dictionary data 25 is the target language code (step S15). In this case, the CPU 17 determines that the j^{th} character is the target language code if any one of the bit string code information of the language code 27 acquired from the setup data 24 in step S1 is contained in the bit string code information of the language code 27 of the j^{th} character of the class i of the dictionary data 25, and that the j^{th} character is not the target language code if not contained in the bit string code information.

If the language code 27 of the j^{th} character of the class i is the target language code (step S15: Yes), the CPU 17 performs a check of the target character selected in step S3 by the matching information 28 of the j^{th} character of the class i in the dictionary data 25 (step S16). If the check is OK, distinguish is made on the target character, and thus the address of the j^{th} character of the class i (or character code such as Shift-JIS (not shown)) is stored and the character recognition is completed. If the check is NG, the process proceeds to the next step S17.

The number of characters of the target character may be stored, where the character recognition is assumed as completed if the check is OK for all the characters, and the process of the character recognition is continued if characters which check is not OK still remain.

The CPU 17 adds one to the variable j (step S17), and returns the process to step S15 and repeats the processes if the variable j is smaller than the number of characters of the class i in the dictionary data 25 (step S18: Yes).

If the variable j is the same or greater than the number of characters of the class i (step S18: No), the CPU 17 adds one to the variable i (step S19).

The CPU 17 returns the process to step S12 and repeats the processes if the variable i is smaller than the number of classes of the dictionary data 25 (step S20: Yes), and terminates the recognition process if the variable i is the same or greater than the number of classes (step S20: No).

According to the above configuration and the operation, both reduction in the memory usage amount and reduction in the processing time due to increase in the recognition target language can be achieved. That is, the matching information 28 of the character common to plural languages are brought together, and the language code 27 in which plural language code 27 of each language is added is given to the matching information 28, so that the amount of data of the dictionary data 25 itself can be reduced. Therefore, the dictionary data 25 can be stored in a limited memory capacity of the portable terminal 1 that is the mobile telephone, and can also be stored with other application data by increasing the vacancy of the memory.

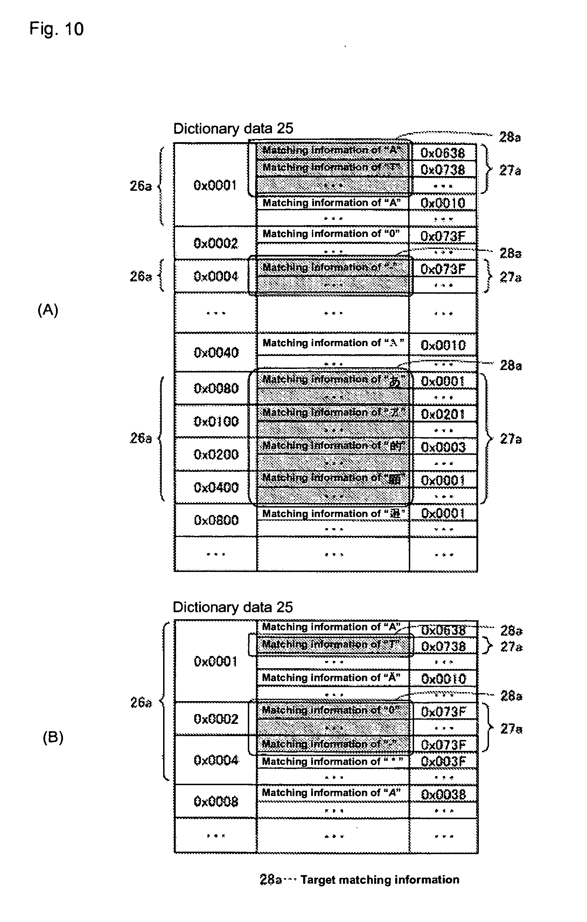

The number of checks by the matching information 28 can be suppressed to a minimum, and the processing time can be reduced. The processing time will be specifically described below along with the explanatory view described in Figs. 10A and 10B.

Assume the word reader is selected in the application selection screen 30 of Fig. 3A, and Japanese and English are selected in the language selection screen 40 of Fig. 3B. In this case, the class code 26 is 0x0780 and 0x002D and the language code 27 is 0x0001 and 0x0008 by the setup data 24.

First, the matching information 28 used in checking is narrowed down to the target class 26a as shown in Fig. 10A by the class code 26. That is, the check of the class other than the target class can be omitted as the initial address of the target class 26a is directly accessed by skipping in step S13.

The matching information 28 used in checking is further narrowed down to the target language 27a by the language code 27. That is, if either one of the language code 27 (0x0001 and 0x0008) selected by the user is not contained in the language code 27 of the record (character) accessed in the dictionary data 25, the check by the matching information 28 of the relevant character is omitted and the process is proceeded to the next record (character).

Therefore, the matching information 28 used in checking is only the target matching information 28a, which is the target class 26a and the target language 27a, of all the matching information 28 registered in the dictionary data 25.

Similarly, assume the card reader is selected in the application selection screen 30 of Fig. 3B, and the telephone number is selected on the card category selection screen 50 of Fig. 4A. In this case, the class code 26 is 0x0007 and the language code 27 is 0x0100 by the setup data 24.

First, the matching information 28 used in checking is narrowed down to the target class 26a as shown in Fig. 10B by the class code 26.

The matching information 28 used in checking is further narrowed down to the target language 27a by the language code 27.

Therefore, the matching information 28 used in checking is only the target matching information 28a of all the matching information 28 registered in the dictionary data 25.

Thus, the matching information 28 of the check target is narrowed down to be less than when narrowing down with only the class code 26 or when narrowing down with only the language code 27, whereby useless checking can be eliminated and the processing speed can be increased.

Jump can be directly made to the region stored with the matching information 28 of the check target for checking by the class code 26 and the initial address 29 stored at the header portion 25a of the dictionary data 25, thereby achieving high-speed processing.

The language code 27 is given to the matching information 28 of each character, and the language (attribute) to which the relevant character belongs is made definite, and thus the matching information 28 used in checking can be minimized. That is, the characters "T, E, L, P, H, O, N, t, e, I, p, h, o, n" contained in "TELEPHONE" or "telephone" of the alphabet characters can be read even with the function of reading the telephone number with the card reader, and thus the language code 27 of the telephone number is given. Thus, when reading the telephone number with the card reader, only "T, E, L, P, H, O, N, t, e, I, p, h, o, n" become the check target of the class of alphabet (standard type). Thus, the processing time can be reduced by reducing the check target.

The same character is not registered in plural languages, and the dictionary data 25 itself can be optimized. Thus, even when recognizing the languages of two or more countries all at once, the redundant process of recognizing the same character with the respective language can be prevented, and the processing time can be reduced.

The recognition rate can be enhanced since the matching information 28 used in checking can be optimized to a minimum according to the application. In other words, the lesser the matching information 28 of the check target, misrecognition due to similarity in feature quantity can be prevented, and the rate of correct recognition can be increased.

Moreover, high-speed processing without redundancy can be carried out according to the application since the same attribute (e.g., Japanese) is finely categorized according to the character type (e.g., Hiragana, Katakana, first standard of Japanese character, second standard of Japanese character (name of person, name of place), second standard of Japanese character (others)).

High recognition rate can be obtained while maintaining high speed according to the application by dividing the same character having a greatly different character style such as italic type and standard type, or current standard type and past text in German, and the like into different classes. That is, the recognition rate normally degrades when attempting to recognize the same character having a greatly different character style with the same matching dictionary. However, the class can be selected according to the application, and the recognition rate can be enhanced.

The language code 27 is also allocated for every application category other than language such as telephone number, E-mail, URL, and the like without being limited to country-by-country. Thus, the recognition with only the character used in the each application of the telephone number, E-mail, URL, and the like can be carried out at high speed without increasing the memory usage amount.

In the embodiment above, the dictionary data 25 stored in the ROM 18 may be configured to be read out to the RAM 19 and used. In this case, all the dictionary data 25 may be read out, or part of the dictionary data 25 narrowed down by the target class 26a, the target language 27a, or both may be read out. If the data to read out is narrowed down, the amount of data to read out to the RAM 19 can be reduced.

In correspondence between the configuration of the present invention and the embodiment described above,
the computer and the character recognition device of the present invention correspond to the portable terminal 1 of the embodiment, and similarly,
character image acquiring unit corresponds to the image input unit 3;
character recognition electronic component corresponds to the chip 15;
calculation unit corresponds to the CPU 17;
specifying unit corresponds to the CPU 17 executing step S1;
output unit corresponds to the CPU 17 executing step S5;
storage unit corresponds to the ROM 18;
character type corresponds to the class code 26;
category corresponds to the language code 27;
registered character data corresponds to the matching information 28;
check target corresponds to the target matching information 28a;
initial address data corresponds to the initial address 29;
character image of recognition purpose corresponds to the character image 62:
category specifying step corresponds to step S1;
character image acquiring step corresponds to step S2;
character outputting step corresponds to step S5; and
check target reduction step corresponds to step S15, but
the present invention is not limited solely to the configuration of the above-described embodiment, and great number of embodiments can be obtained.

## Claims

1. A character recognition program for causing a computer to execute the steps of:
a category specifying step (S1) of selecting a language by a user and specifying one or a plurality of target categories attributed to the selected language by a specifying unit (5), wherein the categories are characters types defined by class codes (26) indicating which character types are used a respective language in a data structure for categorizing the registered character data (28) of dictionary data (25) stored in a storage unit (18);
a character image acquiring step (S2) of acquiring a character image of a recognition target by a character image acquiring unit (3);
a check target reduction step (S15) of reducing a check target (28a) to those registered character data attributed to said one or plurality of target categories specified in the category specifying step that are also designated by a language code (27) corresponding to the user selected language;
a checking step (S16) of checking the character in the character image with each registered character data of the check target; and
a character outputting step (S5) of outputting the character recognized from the check result by an output unit (7).

2. The character recognition program according to claim 1, wherein
in the dictionary data (25) the registered character data (28) is categorized in units of character type (26) whereby initial address data indicate initial addresses of regions that store the registered character data of each character type in the storage unit (18); and
the check target reduction step jumps to the initial address of the character type of the check target and performs a check by the registered character data given the language category in the character type, and repeats the process of jumping to the initial address of the character type of the next check target when the check in the character type is terminated to reduce the check target.

3. The character recognition program according to claim 1 or 2, wherein the language category is configured by an attribute which distinguishes languages in which the registered character data is used. indicating which characters types are used in a respective language

4. The character recognition program according to claim 2, wherein one or both of the category and the character type is configured by a bit string code.

5. A character recognition electronic component (15) comprising:
the storage unit (18) storing a character recognition program (23) according to any of claims 1 to 4, and the dictionary data (25); and
a calculation unit (17) for executing each step.

6. A character recognition device (1) comprising:
the storage unit (18) storing a character recognition program (23) according to any of claims 1 to 4, and the dictionary data (25);
a calculation unit (17) for executing each step; and
the specifying unit (5), the character image acquiring unit (3), and the output unit (7).

7. A character recognition method comprising the steps of:
a category specifying step (S1) of selecting a language by a user and specifying one or a plurality of target categories attributed to the selected language by a specifying unit (5), wherein the categories are characters types defined by class codes (20) in a data structure for categorizing the registered character data (28) of a dictionary data (25) stored in a storage unit (18);
a character image acquiring step (S2) of acquiring a character image of recognition target by a character image acquiring unit (3);
A check target reduction step (S15) of reducing a check target (28a) to those registered character data attributed to said one or plurality of target categories specified in the category specifying step; that are also designated by a language code (27) corresponding to the uses selected language;
a checking step (S17) of checking the character in the character image with each registered character data of the check target; and
a character outputting step (S5) of outputting the character recognized from the check result by an output unit (7).

8. A data structure of dictionary data for use in the character recognition method according to claim 7, wherein the registered character data (28) of said dictionary data is individually categorized by one or a plurality of categories configured as language codes (27) that distinguish languages in which the registered character data is used, and
the registered character data is registered in units of character type (26).

9. The data structure according to claim 8, wherein initial address information indicating an initial address in units of character type is registered at a header portion (25a).

## Patentansprüche

1. Zeichenerkennungsprogramm, um zu veranlassen, dass ein Computer die folgenden Schritte ausführt:
einen Kategoriespezifizierungsschritt (S1) zum Auswählen einer Sprache durch einen Anwender und zum Spezifizieren einer oder mehrerer der ausgewählten Sprache zugeschriebenen Zielkategorien durch eine Spezifizierungseinheit (5), wobei die Kategorien durch Klassencodes (26), die angeben, welche Zeichentypen in einer jeweiligen Sprache verwendet werden, in einer in einer Speichereinheit (18) gespeicherten Datenstruktur zum Klassifizieren der registrierten Zeichendaten (28) von Wörterbuchdaten (25) definierte Zeichentypen sind;
einen Zeichenbilderfassungsschritt (S2) zum Erfassen eines Zeichenbilds eines Erkennungsziels durch eine Zeichenbilderfassungseinheit (3);
einen Prüfzielreduzierungsschritt (S15) zum Reduzieren eines Prüfziels (28a) auf jene registrierten Zeichendaten, die dem einen oder den mehreren in dem Kategorienspezifizierungsschritt spezifizierten Zielkategorien zugeschrieben sind, die ebenfalls durch einen Sprachcode (27) bestimmt sind, der der vom Anwender gewählten Sprache entspricht;
einen Prüfschritt (S16) zum Prüfen des Zeichens in dem Zeichenbild mit jedem registrierten Zeichendatenelement des Prüfziels; und
einen Zeichenausgabeschritt (S5) zum Ausgeben des von dem Prüfergebnis erkannten Zeichens durch eine Ausgabeeinheit (7).

2. Zeichenerkennungsprogramm nach Anspruch 1, bei dem die registrierten Zeichendaten (28) in den Wörterbuchdaten (25) in Einheiten des Zeichentyps (26) klassifiziert sind, wobei die Anfangsadressendaten Anfangsadressen von Gebieten angeben, die die registrierten Zeichendaten jedes Zeichentyps in der Speichereinheit (18) speichern; und
der Prüfzielreduzierungsschritt zu der Anfangsadresse des Zeichentyps des Prüfziels springt und eine Prüfung durch die registrierten Zeichendaten bei vorgegebener Sprachkategorie in dem Zeichentyp ausführt und den Prozess des Springens zu der Anfangsadresse des Zeichentyps des nächsten Prüfziels wiederholt, wenn die Prüfung in dem Zeichentyp abgeschlossen wird, um das Prüfziel zu reduzieren.

3. Zeichenerkennungsprogramm nach Anspruch 1 oder 2, bei dem die Sprachkategorie durch ein Attribut konfiguriert ist, das Sprachen unterscheidet, in denen die registrierten Zeichendaten verwendet werden.

4. Zeichenerkennungsprogramm nach Anspruch 2, bei dem die Kategorie und/oder der Zeichentyp durch einen Bitfolgencode konfiguriert ist bzw. sind.

5. Elektronisches Bauteil (15) zur Zeichenerkennung, das umfasst:
die Speichereinheit (18), die ein Zeichenerkennungsprogramm (23) nach einem der Ansprüche 1 bis 4 und die Wörterbuchdaten (25) speichert; und
eine Recheneinheit (17) zum Ausführen jedes Schritts.

6. Zeichenerkennungsvorrichtung (1), die umfasst:
die Speichereinheit (18), die ein Zeichenerkennungsprogramm (23) nach einem der Ansprüche 1 bis 4 und die Wörterbuchdaten (25) speichert;
eine Recheneinheit (17) zum Ausführen jedes Schritts; und
die Spezifizierungseinheit (5), die Zeichenbilderfassungseinheit (3) und die Ausgabeeinheit (7).

7. Zeichenerkennungsverfahren, das die folgenden Schritte umfasst:
einen Kategoriespezifizierungsschritt (S1) zum Auswählen einer Sprache durch einen Anwender und zum Spezifizieren einer oder mehrerer der ausgewählten Sprache zugeschriebenen Zielkategorien durch eine Spezifizierungseinheit (5), wobei die Kategorien durch Klassencodes (26), die angeben, welche Zeichentypen in einer jeweiligen Sprache verwendet werden, in einer in einer Speichereinheit (18) gespeicherten Datenstruktur zum Klassifizieren der registrierten Zeichendaten (28) von Wörterbuchdaten (25) definierte Zeichentypen sind;
einen Zeichenbilderfassungsschritt (S2) zum Erfassen eines Zeichenbilds eines Erkennungsziels durch eine Zeichenbilderfassungseinheit (3);
einen Prüfzielreduzierungsschritt (S15) zum Reduzieren eines Prüfziels (28a) auf jene registrierten Zeichendaten, die dem einen oder den mehreren in dem Kategorienspezifizierungsschritt spezifizierten Zielkategorien zugeschrieben sind, die ebenfalls durch einen Sprachcode (27) bestimmt sind, der der vom Anwender gewählten Sprache entspricht;
einen Prüfschritt (S17) zum Prüfen des Zeichens in dem Zeichenbild mit jedem registrierten Zeichendatenelement des Prüfziels; und
einen Zeichenausgabeschritt (S5) zum Ausgeben des von dem Prüfergebnis erkannten Zeichens durch eine Ausgabeeinheit (7).

8. Datenstruktur von Wörterbuchdaten zur Verwendung in dem Zeichenerkennungsverfahren nach Anspruch 7, bei der die registrierten Zeichendaten (28) der Wörterbuchdaten einzeln durch eine oder mehrere Kategorien klassifiziert werden, die als Sprachcodes (27) konfiguriert sind, die Sprachen unterscheiden, in denen die registrierten Zeichendaten verwendet werden, und
die registrierten Zeichendaten in Einheiten des Zeichentyps (26) registriert sind.

9. Datenstruktur nach Anspruch 8, bei der Anfangsadresseninformationen,die eine Anfangsadresse in Einheiten des Zeichentyps angeben, bei einem Anfangsblockabschnitt (25a) registriert sind.

## Revendications

1. Programme de reconnaissance de caractère pour amener un ordinateur à exécuter les étapes suivantes :
une étape de spécification de catégorie (S1) pour sélectionner une langue par un utilisateur et pour spécifier une ou plusieurs catégories cibles attribuées à la langue sélectionnée par une unité de spécification (5), dans lequel les catégories sont des types de caractères définis par des codes de classe (26) indiquant quels types de caractères sont utilisés dans une langue respective dans une structure de données pour catégoriser les données de caractère enregistrées (28) de données de dictionnaire (25) stockées dans une unité de stockage (18) ;
une étape d'acquisition d'image de caractère (S2) pour acquérir une image de caractère d'une cible de reconnaissance par une unité d'acquisition d'image de caractère (3) ;
une étape de réduction de cible de contrôle (S 15) pour réduire une cible de contrôle (28a) aux données de caractère enregistrées attribuées à ladite une ou plusieurs catégories cibles spécifiées à l'étape de spécification de catégorie qui sont également désignées par un code de langue (27) correspondant à la langue sélectionnée par l'utilisateur ;
une étape de contrôle (S 16) pour contrôler le caractère dans l'image de caractère avec chacune des données de caractère enregistrées de la cible de contrôle ; et
une étape de sortie de caractère (S5) pour délivrer le caractère reconnu à partir du résultat de contrôle par une unité de sortie (7).

2. Programme de reconnaissance de caractère selon la revendication 1, dans lequel
dans les données de dictionnaire (25), les données de caractère enregistrées (28) sont catégorisées en unités de type de caractère (26), les données d'adresses initiales indiquent ainsi les adresses initiales des régions qui stockent les données de caractère enregistrées de chaque type de caractère dans l'unité de stockage (18) ; et
l'étape de réduction de cible de contrôle saute à l'adresse initiale du type de caractère de la cible de contrôle et effectue un contrôle par les données de caractère enregistrées données par la catégorie de langue dans le type de caractère, et répète le processus de saut à l'adresse initiale du type de caractère de la cible de contrôle suivante lorsque le contrôle du type de caractère est terminé pour réduire la cible de contrôle.

3. Programme de reconnaissance de caractère selon la revendication 1 ou 2, dans lequel la catégorie de langue est configurée par un attribut qui distingue les langues dans lesquelles les données de caractère enregistrées sont utilisées.

4. Programme de reconnaissance de caractère selon la revendication 2, dans lequel la catégorie et/ou le type de caractère sont configurés par un code de chaîne binaire.

5. Composant électronique de reconnaissance de caractère (15) comprenant :
l'unité de stockage (18) stockant un programme de reconnaissance de caractère (23) selon l'une quelconque des revendications 1 à 4, et les données de dictionnaire (25) ; et
une unité de calcul (17) pour exécuter chaque étape.

6. Dispositif de reconnaissance de caractère (1) comprenant :
l'unité de stockage (18) stockant un programme de reconnaissance de caractère (23) selon l'une quelconque des revendications 1 à 4, et les données de dictionnaire (25) ;
une unité de calcul (17) pour exécuter chaque étape ; et
l'unité de spécification (5), l'unité d'acquisition d'image de caractère (3), et l'unité de sortie (7).

7. Méthode de reconnaissance de caractère comprenant les étapes suivantes :
une étape de spécification de catégorie (S1) pour sélectionner une langue par un utilisateur et pour spécifier une ou plusieurs catégories cibles attribuées à la langue sélectionnée par une unité de spécification (5), dans lequel les catégories sont des types de caractères définis par des codes de classe (26) indiquant quels types de caractères sont utilisés dans une langue respective dans une structure de données pour catégoriser les données de caractère enregistrées (28) de données de dictionnaire (25) stockées dans une unité de stockage (18) ;
une étape d'acquisition d'image de caractère (S2) pour acquérir une image de caractère d'une cible de reconnaissance par une unité d'acquisition d'image de caractère (3) ;
une étape de réduction de cible de contrôle (S 15) pour réduire une cible de contrôle (28a) aux données de caractère enregistrées attribuées à ladite une ou plusieurs catégories cibles spécifiées à l'étape de spécification de catégorie qui sont également désignées par un code de langue (27) correspondant à la langue sélectionnée par l'utilisateur ;
une étape de contrôle (S 17) pour contrôler le caractère dans l'image de caractère avec chacune des données de caractère enregistrées de la cible de contrôle ; et
une étape de sortie de caractère (S5) pour délivrer le caractère reconnu à partir du résultat de contrôle par une unité de sortie (7).

8. Structure de données de données de dictionnaire pour utilisation dans la méthode de reconnaissance de caractère selon la revendication 7, dans laquelle
les données de caractère enregistrées (28) desdites données de dictionnaire sont individuellement catégorisées selon une ou plusieurs catégories configurées en tant que codes de langues (27) distinguant des langues dans lesquelles les données de caractère enregistrées sont utilisées, et
les données de caractère enregistrées sont enregistrées en unités de type de caractère (26).

9. Structure de données selon la revendication 8, dans laquelle des informations d'adresses initiales indiquant une adresse initiale en unités de type de caractère sont enregistrées au niveau d'une partie d'en-tête (25a).
